# EUROPÄISCHE PATENTSCHRIFT

(11) **EP 0 345 665 B1**
(45) Veröffentlichungstag und Bekanntmachung des Hinweises auf die Patenterteilung: **09.11.1994**
(21) Anmeldenummer: 89110040.6
(22) Anmeldetag: 02.06.1989
(51) Int. Cl.: G05B 19/00, F15B 13/16, F16K 37/00

(54) **Verfahren und Vorrichtung zur Regelung der Position von Stellventilen**
Method and device for controlling the position of a servo valve
Méthode et dispositif pour contrôler la position d'une vanne de commande

(30) Priorität: 04.06.1988 DE 3819122
(43) Veröffentlichungstag der Anmeldung: 13.12.1989
(73) Patentinhaber: Schubert & Salzer Control Systems GmbH, 85053 Ingolstadt (DE)
(72) Erfinder: Lange, Rainer, Dr., D-8858 Neuburg/Donau (DE); Bader, Heinz, D-8859 Karlshuld (DE)
(74) Vertreter: Canzler, Rolf, Dipl.-Ing.

(56) Entgegenhaltungen:
- EP-A- 0 276 338
- DD-C- 205 264
- DE-A- 3 329 944
- DE-A- 3 635 442
- GB-A- 963 697
- US-A- 3 560 830

## Beschreibung

Die Erfindung betrifft ein Verfahren und eine Vorrichtung zur Regelung der Position von Stellventilen mit fluid- oder elektromotorisch betriebenen, geregelten Stellantrieben. Diese werden im wesentlichen dazu benutzt, die Position von Stellventilen, die beispielsweise den Durchfluß eines Mediums durch eine Leitung steuern, zu regeln.

Es ist bekannt, dazu pneumatisch betriebene, geregelte Stellantriebe, die nach dem Kraftvergleichsprinzip arbeiten oder elektronisch geregelte Stellantriebe mit Elektromotor zu verwenden. Die der Regeleinrichtung rückgeführte Regelgröße wird dabei von der Übertragungseinrichtung des Stellmotors, z.B. von der Ventilspindel des gesteuerten Ventils generiert und mittels eines elastischen Elements dem Vergleicher der Regeleinrichtung zugeführt. Pneumatisch betriebene, geregelte Stellantriebe zeigen die DE-2.847.380 C2 und die DE-3.329.944 A1. Bei elektronisch geregelten Stellantrieben erfolgt die Rückführung der Regelgröße beispielsweise über einen induktiven Wegaufnehmer. Einen solchen Stellantrieb beschreibt die DE-2.952.695 A1.

Die bekannten geregelten Stellantriebe arbeiten dabei nach dem Verfahren, Führungsgröße und Regelgröße miteinander zu vergleichen und in Abhängigkeit vom Ergebnis des Vergleichs den Stellmotor in Richtung einer Angleichung der Regelgröße an die Führungsgröße zu beeinflussen.

Die so geregelten Ventile werden beispielsweise zur Regelung des Durchsatzes eines Mediums durch eine Leitung verwendet. Einer dem geregelten Stellantrieb vorgegebenen Führungsgröße soll dabei ein bestimmter Wert einer übergeordneten Regelgröße, beispielsweise der Durchflußmenge, zugeordnet sein. Der übergeordnete Regelkreis erzeugt ein Signal, die Führungsgröße, das durch den geregelten Stellantrieb in eine Position der Ventilantriebsteile bzw. des Ventils umgesetzt werden muß. Bedingt durch die Schalthysterese des Reglers und die mechanische Hysterese der Ventilantriebsteile ist eine Zuordnung zwischen Führungsgröße und Position des Ventils für eine exakte Regelung nicht genau genug gegeben. Die mechanische Hysterese ist vor allem eine Folge davon, daß die der Regeleinrichtung rückgeführte Regelgröße nicht direkt die Position des Ventils darstellt. Das Erfassen der Ventilposition durch einen Sensor direkt im Ventil ist aus technischen und Kostengründen nur sehr schwer zu verwirklichen. Es wird daher die Position von Ventilantriebsteilen erfaßt und über ein Signal eines Sensor als Regelgröße der Regeleinrichtung rückgeführt.

Die mangelhafte Zuordnung von Führungsgröße und Regelgröße, bei Ventilen meist der Ventilhub bzw. die Position des Ventils, zeigt sich dadurch, daß einem Wert der Führungsgröße zwei Positionen des Ventils zugeordnet sind.

Durch die DE-A-36 35 442 ist zwar ein Verfahren zum Korrigieren eines Totganges zwischen dem Stellantrieb und dem angetriebenen Element des Stellventils in Abhängigkeit der Bewegungsrichtung bekannt, bei welchem die Stellung des angetriebenen Elementes durch einen Detektor ermittelt wird. Die Vorrichtung zum Korrigieren des Totganges beinhaltet Speichermittel zum Speichern der Totganggröße, der Bezugsbewegungsrichtung und der durch einen Absolutstellungsdetektor ermittelten Stellung des angetriebenen Elementes des Ventiles. Dieses bekannte Verfahren befaßt sich jedoch nicht mit den Ungenauigkeiten, die durch den Regler selbst und durch überlagerung verschiedener Toleranzen, sei es vom Regler, als auch des übertragungssystemes, erfolgen. Die bekannte Vorrichtung ist nicht in der Lage diese Fehler in der Stellung des angetriebenen Elementes des Ventiles zu korrigieren, so daß trotz der Korrektur des Totganges im Stellantrieb weitere Ungenauigkeiten unkorrigiert bleiben.

Aufgabe der Erfindung ist es die Qualität der Zuordnung von Führungsgröße und Position des Ventils zu verbessern.

Die Aufgabe wird durch die in Anspruch 1 angegebenen Merkmale gelöst.

Zur Feststellung der Hysterese wird die Zuordnung von Führungsgröße und Regelgröße eines geregelten Stellantriebs über einen Versuch ermittelt. Bei der Führungsgröße (w) handelt es sich um eine von der Regelung nicht unmittelbar beeinflußte Größe, die von außen dem geregelten Stellantrieb zugestellt wird (vergleiche DIN 19226; 6.2.4.). Bei der Regelgröße (x) handelt es sich um die zu regelnde Größe, die Position des Ventils (vergleiche DIN 19226; 1.3.). Dabei soll die Regelgröße (x) der Führungsgröße (w) folgen (vergleiche DIN 19226; 6.2.4.). Bei der Ermittlung der Zuordnung wird zunächst vom Null-Punkt bzw. dem niedrigsten Wert ausgehend der Wert der Führungsgröße bis zum Maximalwert erhöht und die jeweilige dazugehörige Position des Ventils, die Regelgröße (x), gemessen. Anschließend werden mit fallenden Werten der Führungsgröße die dazugehörigen Positionen des Ventils ermittelt. Bei einer grafischen Darstellung, bei der auf der Abszisse die Führungsgröße (w) in Prozent von wₘₐₓ aufgetragen ist und auf der Ordinate die Stellung des Ventils, die Regelgröße (x) in Prozent von xₘₐₓ, ergibt sich eine schleifenförmige Hysterese-Kurve. Der aufsteigende Ast der Hysterese-Kurve ist über die ansteigenden Werte der Führungsgröße ermittelt worden, der absteigende über die fallenden Werte der Führungsgröße. Aus der grafischen Darstellung ist ersichtlich, daß einem Wert der Führungsgröße zwei Ventilpositionen zugeordnet sind. Gleichzeitig folgt daraus, daß eine bestimmte Ventilposition über zwei Werte der Führungsgröße (w) angefahren werden kann. Die Differenz der beiden Werte der Führungsgröße, denen derselbe Wert der Regelgröße zugeordnet ist, wird Hysterese genannt (vergleiche DIN 19226; 4.2.).

Für die Feststellung der Hysterese wird der gesamte Stellantrieb mit dem Ventil, mit dem der Stellantrieb zusammenarbeiten soll, untersucht. Es werden dadurch alle Einflüsse, die für das Zustandekommen der Hysterese verantwortlich sind, erfaßt. Es sind dies beispielsweise die Hysterese der Regeleinrichtung (vergleiche DIN 19226; 7.6.), die Reibung des Stellmotors, Verformungen und mechanisches Spiel im Ventilantrieb und im Ventil selbst.

Bei der Ermittlung können verschiedene Formen einer Hysterese-Kurve auftreten, die die verschiedenen Abweichungen der Zuordnung von Führungs- und Regelgröße darstellen. Die Ermittlung des Korrekturwertes erfolgt über das Bilden der Differenz zwischen der Kurve der idealen Zuordnung von Führungssignal und Regelgröße und dem tatsächlichen Verlauf des aufsteigenden bzw. absteigenden Astes der Hysterese-Kurve.

Aus der Hysterese-Kurve ergibt sich weiter, daß ein Korrekturwert sowohl zwischen dem aufsteigenden Ast und der Kurve der idealen Zuordnung von Führungsgröße und Regelgröße auftritt, als auch zwischen dieser und dem absteigenden Ast. Je nach Bewegungsrichtung wird dieser Korrekturwert dem Vergleich von Führungsgröße und Regelgröße mit positiven oder negativen Vorzeichen zugestellt, oder bleibt dem Vergleich zugestellt, beispielsweise wenn sich die Bewegungsrichtung des Stellantriebs nicht ändert.

Der so gebildete Korrekturwert wird dem Vergleich von Führungsgröße und Regelgröße bzw. dem Vergleich der sie abbildenden Größen zugestellt (vergleiche DIN 19226; 7.5.1.). Der Vergleich erfolgt innerhalb der Regelvorrichtung im Vergleicher (vergleiche DIN 19226; 9.3.4.).

Bei einer vorteilhaften Ausgestaltung des Verfahrens wird die Größe des Korrekturwertes in Abhängigkeit von der Führungsgröße verändert. Dabei wird die Größe des Korrekturwertes der jeweiligen Größe der Hysterese angepaßt.

Bei einer weiteren Form des Verfahrens wird der Korrekturwert dem Vergleich dadurch zugestellt, daß er die Regelgröße bzw. eine sich abbildende Größe (vergleiche DIN 19226; 9.3.4.) verändert. Entsprechend kann dies auch über die Führungsgröße geschehen, die dadurch ebenso intern verändert und daraufhin dem Vergleich zugestellt wird.

Eine Vorrichtung zur Durchführung des Verfahrens wird durch Anspruch 5 beschrieben. Diese weist ein Korrekturmittel auf, dem der Korrekturwert eingebbar ist und das den Korrekturwert an den Vergleicher der Regeleinrichtung übertragen kann, wobei sie dies unter Berücksichtigung der Bewegungsrichtung des Stellantriebs bewerkstelligt. Die Korrekturmittel können sowohl mechanische als auch elektronische Bauteile sein.

Bei einer vorteilhaften Ausgestaltung der Vorrichtung sind die Korrekturmittel als Übertragungsglied ausgebildet. Über dieses wird die Regelgröße an den Vergleicher übertragen. Dies kann dabei durch verschiedene, die Regelgrößen abbildende Größen erfolgen. Der Korrekturwert ist dem Übertragungsglied als mechanisches Spiel eingegeben, das zusammen mit dem Positionsgeber wirksam ist. Der Positionsgeber bewegt sich dabei mit Spiel in einer Aussparung des Übertragungsgliedes. Besonders vorteilhaft ist es, wenn die Größe des mechanischen Spiels und damit die des Ausgleichswertes einstellbar ist. Dies erfolgt über das Verkleinern und Vergrößern der Aussparung, z.B. mittels einer Stellschraube.

Eine weitere vorteilhafte Vorrichtung beschreibt Anspruch 9. Die Korrekturmittel sind dabei elektronische Bauteile, die über Speichermittel, Eingabemittel und Rechenprogramme eine elektronische Regelung erweitern. Besonders vorteilhaft ist die Ausbildung der Korrekturmittel als Mikrocomputer.

Eine besonders günstige Ausgestaltung der Vorrichtung beschreibt Anspruch 11. Durch die Verwendung der beschriebenen Bauteile und deren Anordnung wird eine besonders günstige Regeleinrichtung gestaltet. Dabei kann mit wenigen, preisgünstigen Bauteilen das erfindungsgemäße Verfahren durchgeführt werden.

Durch zusätzliche Schaltmittel können der Reglereinrichtung über den Mikrocomputer Werte zur Veränderung der Zuordnung von Führungsgröße und Regelgröße eingegeben werden. Zusätzlich zur Verringerung der Hysterese kann damit auf einfache Weise die Regelcharakterisitk der Vorrichtung verändert werden. Zusätzliche, vorteilhafte Ausgestaltungen der Erfindung sind in den weiteren Unteransprüchen beschrieben.

Im folgenden wird die Erfindung anhand von zeichnerischer Darstellungen beschrieben. Es zeigen
- Figur 1: eine schematische Darstellung eines elektromotorisch betriebenen Stellantriebs;
- Figur 2: eine schematische Darstellung der elektronischen Regeleinrichtung;
- Figur 3: eine Hysterese-Kurve; und
- Figur 4: einen pneumatisch betriebenen Stellantrieb.

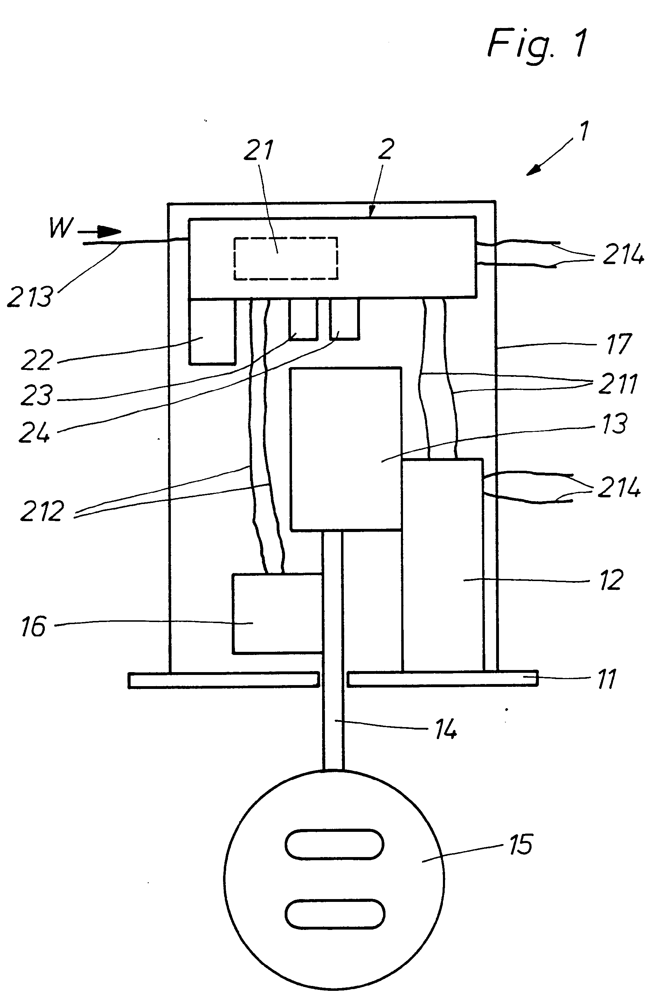

Figur 1 zeigt einen elektronisch betriebenen, elektronisch geregelten Stellantrieb 1. Dieser besitzt eine Trägerplatte 11. Auf dieser ist ein Elektromotor 12 angeordnet, der seine Bewegung über ein Getriebe 13 an eine Ventilspindel 14 überträgt. Unterhalb der Trägerplatte 11 am Ende der Ventilspindel 14 befindet sich ein Stellventil, das schematisch als Gleitschieberventil 15 dargestellt ist. Zum Erfassen der Position der Ventilspindel 14 sitzt an dieser ein Potentiometer 16. Weiterhin befindet sich innerhalb des Gehäuses 17 die elektronische Regelung 2 des Stellantriebs 1. Diese ist mit dem Elektromotor 12 über Steuerleitungen 211 verbunden. Zur Rückführung der Regelgröße ist die Regelung 2 über Signalleitungen 212 mit dem Potentiometer 16 verbunden. Über die Verbindungsleitung 213 zu einem übergeordneten Regelkreis wird der Regelung 2 ein Führungssignal w zugeleitet. Die Regelung 2 und der Elektromotor 12 werden über die Versorgungsleitungen 214 mit elektrischer Energie versorgt.

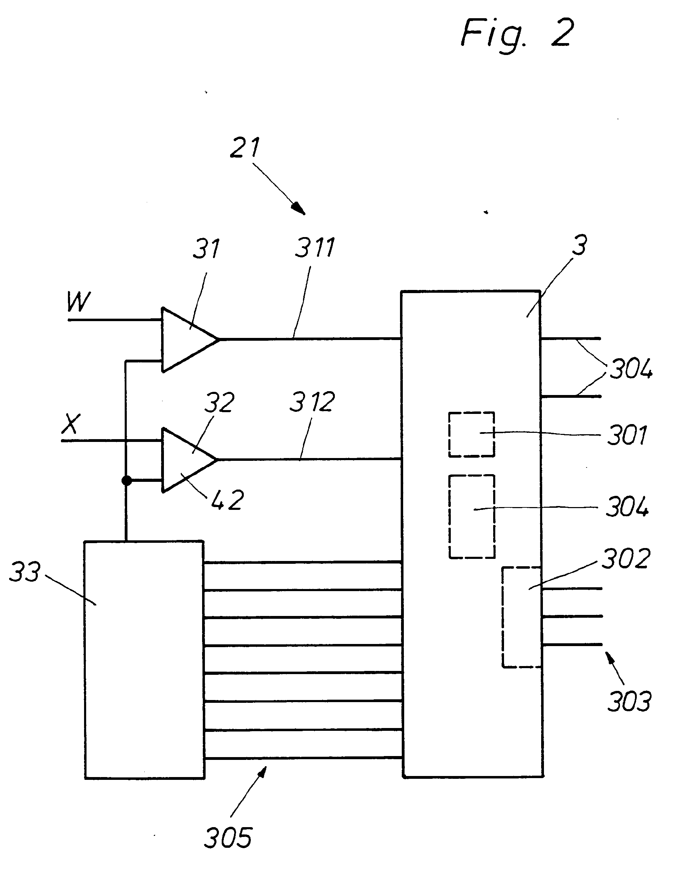

Die elektronische Regelung 2 beinhaltet im wesentlichen die Regeleinrichtung 21 (vergleiche DIN 19226; 7.6.1.), sowie nicht dargestellte Hilfseinrichtungen. Die Regeleinrichtung 21 besteht aus einem Mikrocomputer, zwei Steuervergleichern, einem Digital-Analog-Umsetzer und deren Hilfseinrichtungen. Dies wird in Figur 2 dargestellt und dort beschrieben.

Der Regelung 2 sind weiterhin Schaltmittel 22 zugeordnet. Über diese, die mit mehreren Ein/Aus-Schaltern ausgestattet sind, ist es möglich, die Auswahl der Arbeitsprogramme des Mikrocomputers und die Aktivierung bestimmter Speichermittel zu beeinflussen. Es können dadurch beispielsweise bestimmte Ventilkennlinien oder Programme abgerufen werden.

Der Regelung 2 sind Schnittstellen 23 zugeordnet, die als Kupplung ausgebildet sind. Im Bedarfsfall kann daran ein Kabel zum Erfassen von Daten angeschlossen werden.

Der Regelung 2 ist eine Überwachungsschaltung 24 zugeordnet. Über diese werden die Abläufe im Mikrocomputer überwacht. Durch einen zusätzlichen Vergleich von Führungsgröße und Regelgröße, die der Überwachungsschaltung 24 zugeführt werden, wird überwacht, ob der Stellantrieb 1 vorschriftsmäßig arbeitet. Über nicht gezeigte Kontrollanzeiger kann das Funktionieren von außen erkannt werden.

In Figur 2 ist die Regeleinrichtung 21 mit ihren wesentlichen Teilen dargestellt. Sie besteht aus einem Mikrocomputer 3, der als Einchip-Mikrocomputer ausgebildet ist, aus einem Steuervergleicher 31, einem Steuervergleicher 32 und einem Digital-Analog-Umsetzer 33. Der Mikrocomputer 3 besitzt als wesentliche Bestandteile Speichermittel 301, Eingabemittel 302 mit Anschlüssen 303 und Datenverarbeitungsmittel 304, die als zentrale Recheneinheit (CPU) ausgebildet ist. Die Eingabemittel können dabei als Tastatur oder als Dateneingänge in Form von Anschlüssen 303 mit einem dazugehörigen Permanentspeicher ausgebildet sein. Der Mikrocomputer 3 besitzt zwei Ausgänge 304, über die das Stellsignal (y) in Form von Schaltimpulsen zum Elektromotor 12 geleitet wird, acht Datenausgänge 305, die zum Digital-Analog-Umsetzer 33 führen, und zwei Eingänge 311, 312, die die Verbindung zu den Steuervergleichern 31, 32 herstellen. Nicht dargestellt sind beispielsweise Energieversorgungsleitungen und Leitungen zur Überwachung. Der Ausgang 331 des Digital-Analog-Umsetzers 33 ist mit je einem Eingang der Steuervergleicher 31, 32 verbunden. An den zwei anderen Eingängen der Steuervergleicher 31, 32 liegen beim Steuervergleicher 31 die Führungsgröße w an, am Steuervergleicher 32 die Regelgröße x.

Die Regeleinrichtung arbeitet folgendermaßen: Liegt eine neue Führungsgröße w am Steuervergleicher 31 an, wird dem Mikrocomputer ein Signal über den Eingang 311 zugestellt. Daraufhin erstellt der Mikrocomputer 3 in sinnvoller Weise digitale Werte bis einer dieser Werte, die über den Digital-Analog-Umsetzer dem Steuervergleicher 31 zugestellt werden, mit der Führungsgröße w übereinstimmt. Der so vom Mikrocomputer 3 erkannte Wert der Führungsgröße w wird gespeichert. In bestimmten zeitlichen Abständen wird der am Steuervergleicher 31 anliegende Wert der Führungsgröße w mit dem im Mikrocomputer 3 gespeicherten Wert verglichen. Dadurch kann der Mikrocomputer erkennen, ob eine neue Führungsgröße anliegt.

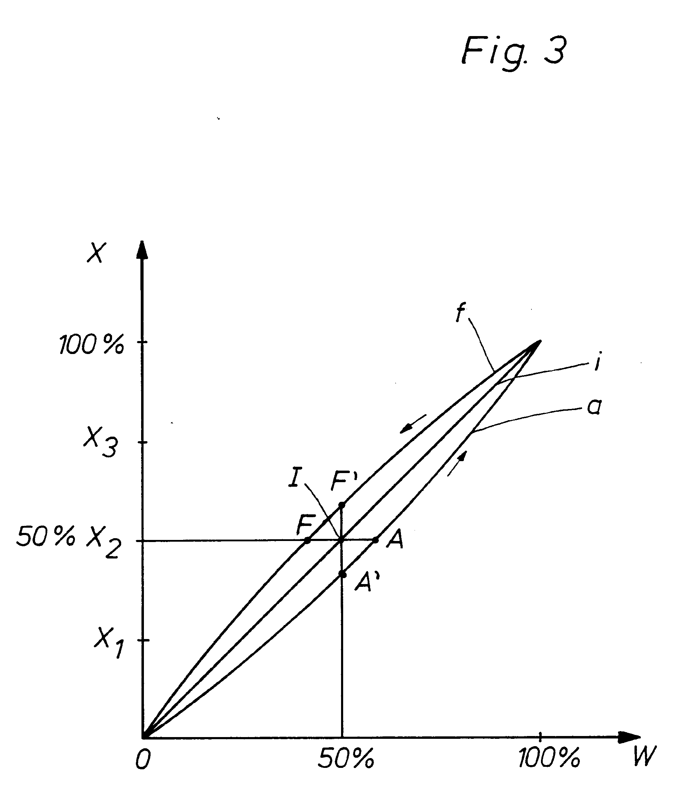

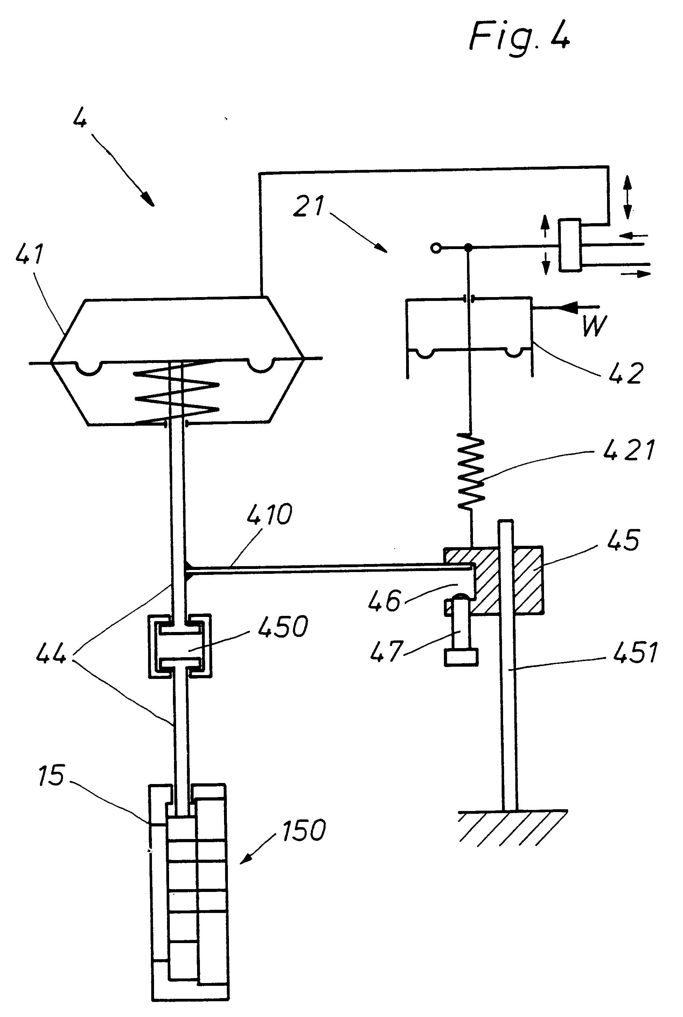

Figur 3 zeigt eine durch Versuch ermittelte Hysterese-Kurve. Auf der Abszisse ist die Führungsgröße w in Prozent aufgetragen, auf der Ordinate die Regelgröße x (Hub des Ventils/Ventilposition/ersatzweise die Position der Ventilantriebsteile). Der Kurvenast a wurde für kontinuierlich steigende Werte der Führungsgröße w ermittelt, der Kurvenast f für fallende. Die Kurve der idealen Zuordnung ist mit i gekennzeichnet. Wird vom übergeordneten Regelkreis eine Ventilposition, z.B. 50 % vom maximalen Hub gewünscht, so ergeht eine Führungsgröße w = 50 % vom Maximalwert der Führungsgröße an die Regeleinrichtung. Im Idealfall (Kurve i) würde das Ventil die Ventilposition 50 % vom Maximalhub erreichen. Bei Vorliegen einer Hysterese wird der Wert jedoch nicht erreicht. Sollen die 50 % Hub von einem bereits vorliegenden Hub kleiner als 50 % aus angefahren werden, wird der Wunsch-Hub unterschritten. Im umgekehrten Fall wird er überschritten. Soll beispielsweise die Ventilposition x = x₂ = 50 % von einem niedrigeren Wert x₁ aus angefahren werden, muß den Wert der Führungsgröße w ein Korrekturwert mit positiven Vorzeichen zugeschlagen werden. Dessen Größe ergibt sich aus dem Abstand zwischen den beiden Schnittpunkten I und A, die eine zur Abszisse waagerechte Gerade durch x₂ mit der Kurve der Idealzuordnung i und dem Kurvenast a hat. Soll der Hub x₂ von x₃ aus angefahren werden, muß der Korrekturwert (Strecke FI) von der Führungsgröße w abgezogen werden. Ein entsprechend ermittelter Korrekturwert kann auch der Regelgröße x zugestellt werden, da ja sowohl die Führungsgröße w als auch die Regelgröße x am selben Vergleicher miteinander verglichen werden. Jedoch wird bei sonst gleichen Verhältnissen der Korrekturwert mit umgekehrtem Vorzeichen zugestellt. Diese Ausgestaltung wird bei Figur 4 näher erläutert.

Entsprechend den aus dem Diagramm von Figur 3 abgeleiteten Werten wird für den Mikrocomputer 3 (Figur 2) ein Programm erstellt und ihm eingegeben. Dieses enthält alle Informationen aus dem mittels eines Versuchs erstellten Diagramm. Über die dem Mikrocomputer 3 vorliegenden Werte der Führungsgröße w und der Regelgröße x wird die Bewegungsrichtung des Stellantriebs und damit das Vorzeichen des Korrekturwerts ermittelt. Über die Führungsgröße w und den Verlauf der Hysterese-Kurve wird die Größe des Ausgleichswerts festgelegt.

Bei der in Figur 2 gezeigten Regeleinrichtung wird also eine durch den Korrekturwert veränderte Führungsgröße w erstellt und vom Vergleicher mit der Regelgröße x verglichen. Das beschriebene Verfahren zum Kompensieren der negativen Auswirkungen der Hysterese ist auch dann anwendbar, wenn aus regelungstechnischen Gründen die Ventilkennlinie über Eingriffe bei der Zuordnung von Führungsgröße und Regelgröße verändert wird.

Figur 4 zeigt einen pneumatisch betriebenen, geregelten Stellantrieb 4 mit einem pneumatischen Stellmotor 41, mit einer Regeleinrichtung 21, mit einem Vergleicher 42 und einem Steuerventil 43. Der Stellmotor 41 steuert über ein Antriebsgestänge 44 ein Stellventil 150, das als Gleitschieberventil 15 dargestellt ist. Das Spiel des Antriebsgestänges 44 ist durch eine Unterbrechung 450 dargestellt. Die Regelgröße x wird über einen Positionsgeber 410 an ein Übertragungsglied 45 übergeben und von diesem über ein elastisches Element 421 dem Vergleicher 42 zugestellt. Das Übertragungsglied 45 kann auf seiner Führung 451 nur vom Positionsgeber 410 in seiner Lage verändert werden.

Das Spiel 46 der Übertragungseinrichtung repräsentiert die Hysterese des Systems. Diese entspricht hier in etwa dem Spiel des Antriebsgestänges 44, das durch die Unterbrechung 450 dargestellt ist. Über das Spiel 46 wird der Korrekturwert der Regelgröße x einmal positiv und einmal negativ zugestellt. Der Korrekturwert bleibt bei einer Bewegung des Stellantriebs 1, deren Richtung dieselbe wie die der vorhergehenden Bewegung ist, zugestellt. Bei einer Umkehr der Bewegungsrichtung wird der noch zugestellte Korrekturwert zuerst neutralisiert und dann der neue hinzugefügt. Über die Stellschraube 47 kann das Spiel 46 und damit die Hysterese bzw. der Korrekturwert verändert werden.

Die Größe des Korrekturwerts der Regelgröße x kann wie der Korrekturwert zur Veränderung der Führungsgröße w aus der Hysterese-Kurve abgelesen werden und ergibt sich aus der Strecke A′I bzw. F′I. Wird die Position x₂ von x₁ aus angefahren, muß der Korrekturwert der Regelgröße x mit negativem Vorzeichen zugestellt werden, im umgekehrten Fall mit positivem.

## Patentansprüche

1. Verfahren zur Regelung der Position von Stellventilen, die mit Fluid oder elektromotorisch betriebenen, geregelten Stellantrieben ausgestattet sind und bei denen der Totgang zwischen dem Stellantrieb und dem angetrieben Element des Stellventils in Abhängigkeit der Bewegungsrichtung korrigiert wird, dadurch gekennzeichnet, daß die Hysterese des gesamten Systems, bestehend aus dem Stellantrieb, Ventilantiebsteilen und Regler, vor Inbetriebnahme des Stellventiles durch einen Versuchslauf festgestellt wird, aus dieser Hysterese durch Vergleich von Regelgröße und Führungsgröße ein Korrekturwert gebildet wird, der gespeichert und in Abhängigkeit von der Bewegungsrichtung des angetriebenen Elementes des Stellventiles während des Betriebes dem Vergleich von Führungsgröße und Regelgröße zugestellt wird und die so gebildeten Werte miteinander verglichen werden.

2. Verfahren nach Anspruch 1, dadurch gekennzeichnet, daß die Größe des Korrekturwertes in Abhängigkeit von der Führungsgröße verändert wird.

3. Verfahren nach Anspruch 1 oder 2, dadurch gekennzeichnet, daß der Korrekturwert der Regelgröße zugeordnet wird.

4. Verfahren nach Anspruch 1 oder 2, dadurch gekennzeichnet, daß der Korrekturwert der Führungsgröße zugeordnet wird.

5. Vorrichtung zur Regelung der Position von Stellventilen, die mit Fluid oder elektromotorisch betriebenen, geregelten Stellantrieben ausgestattet sind und bei denen der Totgang zwischen dem Stellantrieb und dem angetrieben Element des Stellventils in Abhängigkeit der Bewegungsrichtung korrigiert wird, wobei die Vorrichtung Einrichtungen zum Speichern der Totganggröße, der Bezugsbewegungsrichtung und der Ventilstellung aufweist, **dadurch** **gekennzeichnet, daß** die Vorrichtung Speichermittel (45; 301) zur Speicherung der durch einen Versuchslauf aus der Hysterese des gesamten Systems ermittelten Korrekturwerte aufweist, aus denen die gespeicherten Korrekturwerte einem Vergleicher (42) der Regeleinrichtung (21) entsprechend der Bewegungsrichtung des Stellantriebes (1) zuführbar sind, der Regelgröße und Führungsgröße unter Einbeziehung der zugeführten Korrekturwerte vergleicht.

6. Vorrichtung nach Anspruch 5, dadurch gekennzeichnet, daß die Speichermittel als Übertragungsglied (45) ausgebildet sind, welches die Position eines Positionsgebers (410) des Stellventils (150) an den Vergleicher (42) überträgt, wobei zwischen übertragungsglied (45) und Positionsgeber (410) oder Vergleicher (42) ein dem Korrekturwert entsprechendes mechanisches Spiel (46) vorgesehen ist.

7. Vorrichtung nach Anspruch 6, dadurch gekennzeichnet, daß der Positionsgeber (410) in eine Aussparung (461) des Übertragungsgliedes (45) eingreift.

8. Vorrichtung nach Anspruch 6 oder 7, dadurch gekennzeichnet, daß das Spiel (46) des übertragungsgliedes (45) einstellbar ist.

9. Vorrichtung nach Anspruch 5, dadurch gekennzeichnet, daß zur Speicherung der Korrekturwerte elektronische Speichermittel (301) sowie Eingabemittel (302) und Datenverarbeitungsmittel (304) für die Eingabe und Verarbeitung der Korrekturwerte vorgesehen sind.

10. Vorrichtung nach Anspruch 9, dadurch gekennzeichnet, daß die Speichermittel (301) und Eingabemittel (302) und Datenverarbeitungsmittel als Mikrocomputer (3) zusammengefaßt sind.

11. Vorrichtung nach Anspruch 10, dadurch gekennzeichnet, daß dem Mikrocomputer (3) zwei Steuervergleicher in Form von Operationsverstärkern zugeordnet sind, ein Eingang des einen Steuervergleichers (31) mit der Führungsgröße ein Eingang des anderen Steuervergleichers (32) mit der Regelgröße beaufschlagt ist, den Steuervergleichern (31, 32) und dem Mikrocomputer (3) ein gemeinsamer Digital-Analog-Umsetzer (33) zugeordnet ist, dessen Ausgang mit den zwei Eingängen der beiden Steuervergleicher (31, 32) verbunden ist und dessen digitale Eingänge (305) und die Ausgänge (311, 312) der beiden Steuervergleicher (31, 32) mit dem Mikrocomputer (3) verbunden sind.

12. Vorrichtung nach einem oder mehreren der Ansprüche 9 bis 11, dadurch gekennzeichnet, daß dem Mikrocomputer (3) Schaltmittel (22) zugeordnet sind, wodurch eine der gespeicherten Ventilkennlinien zur Verarbeitung durch das gespeicherte Rechenprogramm auswählbar ist.

13. Vorrichtung nach einem oder mehreren der Ansprüche 9 bis 12, dadurch gekennzeichnet, daß dem Mikrocomputer (3) Schnittstellen (23) für die Übertragung von Daten an Sicht- und Überwachungseinrichtungen zugeordnet sind.

14. Vorrichtung nach einem oder mehreren der Ansprüche 9 bis 13, dadurch gekennzeichnet, daß dem Mikrocomputer (3) eine Überwachungsschaltung (24) der Regeleinrichtung (21) zugeordnet ist.

15. Vorrichtung nach einem oder mehreren der Ansprüche 9 bis 14, dadurch gekennzeichnet, daß die Regelgröße mittels eines induktiven Wegaufnehmers der Regeleinrichtung (21) rückführbar ist.

16. Vorrichtung nach einem oder mehreren der Ansprüche 9 bis 14, dadurch gekennzeichnet, daß die Regelgröße mittels eines Potentiometers (16) der Regeleinrichtung (21) rückführbar ist.

## Claims

1. A method of controlling the position of control valves which are provided with fluid or with electromotively operated, controlled actuators, in which valves the backlash between the actuator and the actuated element of the control valve is corrected according to the direction of movement, characterised in that the hysteresis of the entire system, consisting of the actuator, valve actuator members and control unit, is established by a test run prior to the commencement of operation of the valve, in that a correction factor is formed from this hysteresis by means of a comparison of the controlled variable and the command variable, which correction factor is stored and is applied to the comparison of the command variable and the controlled variable according to the direction of movement of the actuated element of the control valve during operation, and in that the factors thus formed are compared with each other.

2. A method as claimed in Claim 1, characterised in that the size of the correction factor is altered in dependence upon the command variable.

3. A method as claimed in Claim 1 or Claim 2, characterised in that the correction factor is applied to the controlled variable.

4. A method as claimed in Claim 1 or Claim 2, characterised in that the correction factor is applied to the command variable.

5. Apparatus for controlling the position of control valves which are provided with fluid or with electromotively operated, controlled actuators, in which valves the backlash between the actuator and the actuated element of the control valve is corrected according to the direction of movement, said apparatus having devices for storing the backlash variable, the reference direction of movement and the valve position, **characterised in that** the apparatus has storage means (45; 301) for the storage of the correction factors established from the hysteresis of the entire system by a test run, from which storage means the stored correction factors can be supplied to a comparator device (42) of the control unit (21) according to the direction of movement of the actuator (1), which comparator device compares the controlled variable and the command variable with allowance for the correction factors supplied.

6. Apparatus as claimed in Claim 5, characterised in that the storage means are designed as a transfer element (45) which transmits the position of a position transmitter (410) of the control valve (150) to the comparator device (42), a mechanical play (46) corresponding to the correction factor being provided between the transfer element (45) and the position transmitter (410) or the comparator device (42).

7. Apparatus as claimed in Claim 6, characterised in that the position transmitter (410) engages in a recess (461) of the transfer element (45).

8. Apparatus as claimed in Claim 6 or Claim 7, characterised in that the play (46) of the transfer element (45) is adjustable.

9. Apparatus as claimed in Claim 5, characterised in that electronic storage means (301) are provided for storage of the correction factors, and input means (302) and data processing means (304) are provided for the input and processing of the correction factors.

10. Apparatus as claimed in Claim 9, characterised in that the storage means (301) and input means (302) and data processing means are combined to form a microprocessor (3).

11. Apparatus as claimed in Claim 10, characterised in that two control comparators in the form of operational amplifiers are allocated to the microprocessor (3), in that one input of one control comparator (31) is impinged upon by the command variable and one input of the other control comparator (32) is impinged upon by the controlled variable, and in that, allocated to the control comparators (31, 32) and the microprocessor (3), is a common digital analog converter (33) whose output is connected to the two inputs of the two control comparators (31, 32) and whose digital inputs (305), and the outputs (311, 312) of the two control comparators (31, 32), are connected to the microprocessor (3).

12. Apparatus as claimed in one or more of Claims 9 to 11, characterised in that allocated to the microprocessor (3) are switching means (22), through which one of the valve steady state characteristics stored is selectable for processing by the stored computer program.

13. Apparatus as claimed in one or more of Claims 9 to 12, characterised in that allocated to the microprocessor (3) are interfaces (23) for the transmission of data to display and monitoring devices.

14. Apparatus as claimed in one or more of Claims 9 to 13, characterised in that allocated to the microprocessor (3) is a monitoring circuit (24) of the control unit (21).

15. Apparatus as claimed in one or more of Claims 9 to 14, characterised in that the controlled variable can be returned to the control unit (21) by means of an inductive displacement transducer.

16. Apparatus as claimed in one or more of Claims 9 to 14, characterised in that the controlled variable can be returned to the control unit (21) by means of a potentiometer (16).

## Revendications

1. Procédé pour réguler la position de vannes de commande, qui sont réalisées avec des entraînements régulés, à manoeuvre fluidique ou par des moteurs électriques, et dans lesquelles la marche à vide entre l'entraînement de commande et l'élément entraîné de la vanne de commande est corrigée en fonction du sens du déplacement, procédé caractérisé en ce que l'hystérésis du système complet, consistant en l'entraînement de commande, les pièces entraînant la vanne et le régulateur, est déterminée par une marche d'essai effectuée avant la mise en fonctionnement de la vanne de commande ; en ce qu'à partir de cette hystérésis et par comparaison de la grandeur de régulation et de la grandeur de guidage est formée une valeur de correction qui est mémorisée et qui, en fonction du sens de déplacement de l'élément entraîné de la vanne de commande,est fournie pendant le fonctionnement pour la comparaison de la grandeur de guidage et de la grandeur de régulation,et en ce que les valeurs ainsi formées sont comparées l'une à l'autre.

2. Procédé selon la revendication 1, caractérisé en ce que la grandeur de la valeur de correction est modifiée en fonction de la grandeur de guidage.

3. Procédé selon la revendication 1 ou 2, caractérisé en ce que la valeur de correction est associée à la grandeur de régulation.

4. Procédé selon la revendication 1 ou 2, caractérisé en ce que la valeur de correction est associée à la grandeur de guidage.

5. Dispositif pour réguler la position de vannes de commande, qui sont réalisées avec des entraînements de commande régulés et à entraînement fluidique ou par moteur électrique et dans lesquelles la marche à vide entre l'entraînement de commande et l'élément commandé de la vanne de commande est corrigée en fonction du sens du mouvement, le dispositif présentant des éléments pour la mémorisation de l'amplitude de la marche à vide, du sens du mouvement de référence et de la position de la vanne, dispositif caractérisé en ce qu'il présente des organes de mémoire (45 ; 301) pour mémoriser les valeurs de correction déterminées grâce à une marche d'essai à partir de l'hystérésis de l'ensemble du système, les valeurs de correction ainsi mémorisées pouvant être acheminées à un comparateur (42) du dispositif de régulation (21) selon le sens du mouvement de l'entraînement de commande (1), le comparateur comparant la grandeur de régulation et la grandeur de guidage en tenant compte des valeurs de correction qui lui sont fournies.

6. Dispositif selon la revendication 5, caractérisé en ce que le moyen de mémorisation a la conformation d'un élément de transmission (45), qui transmet au comparateur (42) la position d'un détecteur (410) de position de la vanne (150) de commande, un jeu mécanique (46), correspondant à la valeur de correction, étant prévu entre l'élément (45) de transmission et le détecteur (410) de position ou le comparateur (42).

7. Dispositif selon la revendication 6, caractérisé en ce que le détecteur (410) de position pénètre dans un évidement (461) de l'élément (45) de transmission.

8. Dispositif selon la revendication 6 ou 7, caractérisé en ce que le jeu (46) de l'élément de transmission (45) est réglable.

9. Dispositif selon la revendication 5, caractérisé en ce que, pour la mémorisation des valeurs de correction, sont prévus un moyen (301) du type mémoire électronique ainsi qu'un moyen d'introduction (302) et un moyen (304) de traitement de données pour l'introduction et le traitement des valeurs de correction.

10. Dispositif selon la revendication 9, caractérisé en ce que le moyen de type mémoire (301) et le moyen d'introduction (302) ainsi que le moyen de traitement des données sont regroupés sous la forme d'un microordinateur (3).

11. Dispositif selon la revendication 10, caractérisé en ce qu'au microordinateur ou microprocesseur (3) sont associés deux comparateurs de commande sous forme d'amplificateurs opérationnels, une entrée d'un comparateur de commande (31) recevant les grandeurs de guidage, une entrée de l'autre comparateur (32) de commande recevant les grandeurs de régulation, un seul convertisseur (33) numérique-analogique commun étant associé aux comparateurs (31, 32) de commande et au microprocesseur (3), la sortie de ce convertisseur étant reliée aux deux entrées des deux comparateurs (31, 32) de commande et les entrées numériques (305) du convertisseur ainsi que les sorties (311, 312) des deux comparateurs (31, 32) de commande étant reliées au microprocesseur (3).

12. Dispositif selon une ou plusieurs des revendications 9 à 11, caractérisé en ce qu'au microprocesseur (3) sont associés des commutateurs (22), permettant de choisir l'une des caractéristiques de vannes mises en mémoire pour un traitement par le programme de calcul mis en mémoire.

13. Dispositif selon une ou plusieurs des revendications 9 à 12, caractérisé en ce qu'au microprocesseur (3) sont associées des interfaces (23) de jonction pour la transmission de données à des dispositifs de visualisation et de surveillance.

14. Dispositif selon une ou plusieurs des revendications 9 à 13, caractérisé en ce qu'au microprocesseur (3) est associé un circuit (24) de surveillance du dispositif (21) de régulation.

15. Dispositif selon une ou plusieurs des revendications 9 à 14, caractérisé en ce que la grandeur de régulation peut être réintroduite, à l'aide d'un capteur inductif de déplacement, dans le dispositif (21) de régulation.

16. Dispositif selon une ou plusieurs des revendications 9 à 14, caractérisé en ce que la grandeur de régulation peut être réintroduite, à l'aide d'un potentiomètre (16), dans le dispositif (21) de régulation.
